# EUROPEAN PATENT APPLICATION

(11) **EP 4 844 817 A1**
(43) Date of publication of application: **25.11.2026**
(21) Application number: 25866462.2
(22) Date of filing: 22.08.2025
(51) Int. Cl.: H01M 4/13, H01M 10/42, H01M 4/66, H01M 4/38, H01M 4/587, H01M 4/485

(54) **ELECTRODE AND BATTERY**

(30) Priority: 10.09.2024 KR 20240123138
(71) Applicant: LG Chem, Ltd., Seoul 07336 (KR)
(72) Inventor: KIM, Su Jun, Seoul 07796 (KR); LEE, Seongsoo, Seoul 07796 (KR); LEE, Kyoungsoo, Seoul 07796 (KR)
(74) Representative: Hoffmann Eitle
(86) International application number: PCT/KR2025/012818
(87) International publication number: WO 2026/059159

(57) **Abstract**

The electrode and the battery of the present invention comprise an electrode current collector; an electrolyte layer disposed on one side or both sides of the electrode current collector; an electrode active material layer disposed between the electrode current collector and the electrolyte layer; and a support layer disposed between the electrode active material layer and the electrolyte layer and comprising first inorganic particles and second inorganic particles, wherein the true density of the first inorganic particles may be equal to or less than the true density of the second inorganic particles.

## Description

### TECHNICAL FIELD

The present document claims the benefit of priority based on Korean Patent Application No. 10-2024-0123138 filed with the Korean Intellectual Property Office on September 10, 2024, the entire contents of which are incorporated herein by reference.

The present invention relates to an electrode.

The present invention relates to a battery.

### BACKGROUND ART

An inorganic separator may comprise, as a substrate layer, a layer comprising an inorganic material as a main component. The substrate layer of the inorganic separator may be disposed directly on the electrode active material layer. The inorganic separator may be integrated with the electrode. The inorganic separator may not easily generate high-temperature heat shrinkage. When mechanical, electrical, and chemical abuse of the battery occurs, only local heat generation may occur in the inorganic separator.

Reducing the amount of residual electrolyte solution in a battery using an inorganic separator can reduce the incidence of thermal propagation or runaway. Using a gel polymer electrolyte whose crystallinity and the like are adjusted as the electrolyte of this battery can increase the ionic conductivity of the inorganic separator.

### DISCLOSURE OF INVENTION

### TECHNICAL PROBLEM

The present invention aims to provide an electrode exhibiting excellent mechanical properties, thermal properties, and ionic conductivity.

The present invention aims to provide a battery exhibiting improved safety.

### SOLUTION TO PROBLEM

An embodiment of the present invention is an electrode comprising an electrode current collector; an electrolyte layer disposed on one side or both sides of the electrode current collector and comprising a first composition; an electrode active material layer disposed between the electrode current collector and the electrolyte layer; and a support layer disposed between the electrode active material layer and the electrolyte layer and comprising a second composition, wherein the first composition comprises a binder, a crosslinking agent, an initiator, and an electrolyte solution, the second composition comprises first inorganic particles and second inorganic particles, and the true density of the first inorganic particles is equal to or less than the true density of the second inorganic particles.

The green density of the first inorganic particles may be greater than the green density of the second inorganic particles.

The content of the first inorganic particles and the second inorganic particles of the second composition may be greater than the binder content of the first composition.

The content of the second inorganic particles of the second composition may be 5 wt% or more of the total content of the first inorganic particles and the second inorganic particles of the second composition.

The electrolyte layer may comprise a cured product of the first composition, and the support layer may comprise a dried product of the second composition.

The average size of the first inorganic particles may be within a range of 100 nm to 500 nm, the average longitudinal length of the second inorganic particles may be within a range of 100 nm to 200 nm, and the average transverse length of the second inorganic particles may be within a range of 25 nm to 50 nm.

The first inorganic particles and the second inorganic particles may each independently comprise a lithium-containing metal oxide, a lithium-free metal oxide, or a combination thereof.

The binder may comprise a fluorine-based binder, the fluorine-based binder may comprise a first unit derived from vinylidene fluoride and a second unit derived from a fluorine-containing alkyl vinyl compound, the content of the second unit of the fluorine-based binder may be within a range of 10 wt% to 50 wt%, and the weight average molecular weight of the fluorine-based binder may be within a range of 300,000 g/mol to 1,000,000 g/mol.

The crosslinking agent may comprise a first polyfunctional crosslinking agent and a second polyfunctional crosslinking agent, and the number of functional groups of the first polyfunctional crosslinking agent may be greater than the number of functional groups of the second polyfunctional crosslinking agent.

The initiator may comprise a photopolymerization initiator.

The electrolyte solution may comprise a non-aqueous solvent, a lithium salt, and an electrolyte additive, the non-aqueous solvent may comprise ethylene carbonate and ethyl methyl carbonate, the lithium salt may comprise LiN(CF₃SO₂)₂, and the electrolyte additive may comprise vinylene carbonate.

Another embodiment of the present invention is an electrode comprising an electrode current collector; an electrolyte layer disposed on one side or both sides of the electrode current collector; an electrode active material layer disposed between the electrode current collector and the electrolyte layer; and a support layer disposed between the electrode active material layer and the electrolyte layer, wherein the electrolyte layer comprises a polymeric crosslinked structure and an electrolyte solution impregnated in the polymeric crosslinked structure, the support layer comprises first inorganic particles and second inorganic particles, and the true density of the first inorganic particles is equal to or less than the true density of the second inorganic particles.

The electrode active material layer and the support layer may be in contact with each other.

The first inorganic particles and the second inorganic particles may comprise boehmite (AlO(OH)).

The first inorganic particles may be polygonal inorganic particles, and the second inorganic particles may be plate-shaped inorganic particles or needle-shaped inorganic particles.

The thickness per layer of the electrolyte layer may be greater than the thickness of the electrode current collector, the thickness per layer of the electrolyte layer may be greater than the thickness per layer of the support layer, and the thickness per layer of the support layer may be greater than the thickness of the electrode current collector.

Yet another embodiment of the present invention is a battery comprising a positive electrode and a negative electrode, wherein at least one of the positive electrode and the negative electrode comprises an electrode current collector; an electrolyte layer disposed on one side or both sides of the electrode current collector; an electrode active material layer disposed between the electrode current collector and the electrolyte layer; and a support layer disposed between the electrode active material layer and the electrolyte layer, the electrolyte layer comprises a polymeric crosslinked structure and an electrolyte solution impregnated in the polymeric crosslinked structure, the support layer comprises first inorganic particles and second inorganic particles, and the true density of the first inorganic particles is equal to or less than the true density of the second inorganic particles.

The positive electrode may comprise a positive electrode current collector and a positive electrode active material layer disposed on one side or both sides of the positive electrode current collector, the negative electrode may comprise a negative electrode current collector; a negative electrode electrolyte layer disposed on one side or both sides of the negative electrode current collector; a negative electrode active material layer disposed between the negative electrode current collector and the negative electrode electrolyte layer; and a negative electrode support layer disposed between the negative electrode active material layer and the negative electrode electrolyte layer, the negative electrode electrolyte layer may comprise a first polymeric crosslinked structure and a first electrolyte solution impregnated in the first polymeric crosslinked structure, the negative electrode support layer may comprise first inorganic particles and second inorganic particles, and the true density of the first inorganic particles may be equal to or less than the true density of the second inorganic particles.

The positive electrode may further comprise a positive electrode electrolyte layer, the positive electrode active material layer may be disposed between the positive electrode current collector and the positive electrode electrolyte layer, and the positive electrode electrolyte layer may comprise a second polymeric crosslinked structure and a second electrolyte solution impregnated in the second polymeric crosslinked structure.

Yet another embodiment of the present invention is a battery comprising a first electrode and a second electrode, wherein the first electrode comprises a first electrode current collector, a negative electrode electrolyte layer disposed on one side of the first electrode current collector, a positive electrode active material layer disposed on the other side of the first electrode current collector, a negative electrode active material layer disposed between the first electrode current collector and the negative electrode electrolyte layer, and a negative electrode support layer disposed between the negative electrode electrolyte layer and the negative electrode active material layer, the second electrode comprises a second electrode current collector, a negative electrode electrolyte layer disposed on one side of the second electrode current collector, a positive electrode active material layer disposed on the other side of the second electrode current collector, a negative electrode active material layer disposed between the second electrode current collector and the negative electrode electrolyte layer, and a negative electrode support layer disposed between the negative electrode electrolyte layer and the negative electrode active material layer, the negative electrode electrolyte layer comprises a first polymeric crosslinked structure and a first electrolyte solution impregnated in the first polymeric crosslinked structure, the negative electrode support layer comprises first inorganic particles and second inorganic particles, and the true density of the first inorganic particles is equal to or less than the true density of the second inorganic particles.

The first electrode and the second electrode may further comprise a positive electrode electrolyte layer, the positive electrode active material layer may be disposed between the first electrode current collector and the positive electrode electrolyte layer and between the second electrode current collector and the positive electrode electrolyte layer, and the positive electrode electrolyte layer may comprise a second polymeric crosslinked structure and a second electrolyte solution impregnated in the second polymeric crosslinked structure.

### ADVANTAGEOUS EFFECTS OF INVENTION

The electrode of the present invention can exhibit excellent mechanical properties, thermal properties, and ionic conductivity.

The battery of the present invention can exhibit improved safety.

### BRIEF DESCRIPTION OF THE DRAWINGS

FIG. 1 is a schematic view of the electrode of the present invention.
FIG. 2 is a schematic view of an exemplary battery of the present invention.
FIG. 3 is a schematic view of another exemplary battery of the present invention.
FIG. 4 is a schematic view of yet another exemplary battery of the present invention.
FIG. 5 is a schematic view of yet another exemplary battery of the present invention.
FIG. 6 is an SEM image of the first inorganic particles used in an Example of the present invention.
FIG. 7 is an SEM image of the second inorganic particles used in an Example of the present invention.
FIG. 8 is an SEM image of another second inorganic particles used in an Example of the present invention.

### BEST MODE FOR CARRYING OUT INVENTION

The present document may use ordinal numbers such as "first" and "second" to refer to a plurality of components. Here, there is no priority among the components.

In the present document, when a specific commercial product is used as a certain component, the properties of the component may refer to the properties described in the technical data sheet (TDS) or the certificate of analysis (COA) of the product.

In the present document, when the physical properties of a specific material vary depending on temperature and pressure, the measurement criteria of the property may be 25 °C and 101.325 kPa.

In the present document, the numerical range of "A to B" means "A or more and B or less".

The numerical values mentioned in the present document are rounded values. For example, 1.5 is a number within the range of 1.45 to 1.54.

Hereinafter, the present document describes the present invention in more detail.

An embodiment of the present invention is an electrode.

The electrode of the present invention can be integrated with a separator. The electrode can be integrated with a separator and an electrolyte. Therefore, the battery comprising the electrode integrated with the separator and the electrolyte of the present invention may be different from existing batteries in that it does not require a separate separator and electrolyte.

In the electrode integrated with the separator, the integrated structure of the electrode and the separator may be treated as a single unit. That is, the electrode of the present invention does not treat the separator as a separate member from the electrode.

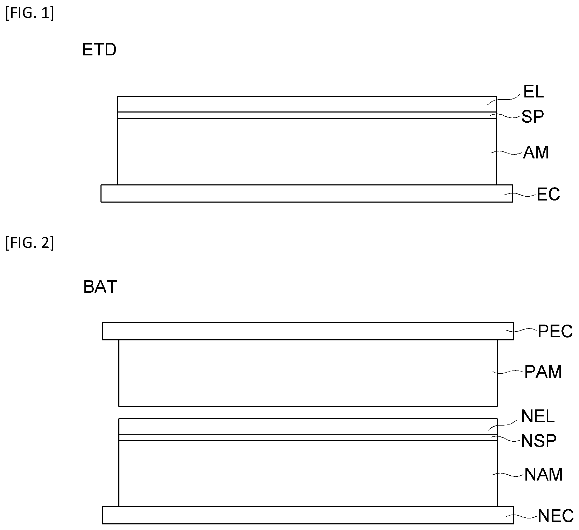

FIG. 1 is a schematic view of the electrode of the present invention.

Referring to FIG. 1, the electrode (ETD) may comprise an electrode current collector (EC), an electrolyte layer (EL) disposed on one side or both sides of the electrode current collector (EC), an electrode active material layer (AM) disposed between the electrode current collector (EC) and the electrolyte (EL) layer, and a support layer (SP) disposed between the electrode active material layer (AM) and the electrolyte layer (EL).

The support layer may comprise inorganic particles and support the electrolyte layer.

In the electrode, the electrolyte layer may be disposed at the outermost portion. The electrolyte layer may be disposed at the topmost, bottommost, or both the topmost and bottommost of the electrode.

The electrode current collector is a member that supports the electrode. The components contained in the electrode current collector may vary depending on the polarity exhibited by the electrode.

When the electrode is a negative electrode, the electrode current collector may comprise at least one selected from the group consisting of copper, gold, and nickel. Preferably, the electrode current collector may comprise a copper film.

When the electrode is a positive electrode, the electrode current collector may comprise at least one selected from the group consisting of aluminum and nickel. Preferably, the electrode current collector may comprise an aluminum film.

The electrode active material layer may be disposed between the electrode current collector and the electrolyte layer. The components constituting the electrode active material layer may vary depending on the polarity of the electrode.

When the electrode is a negative electrode, the electrode active material layer may comprise a lithium intercalation material. The lithium intercalation material may comprise at least one selected from the group consisting of lithium-based metals and carbon-based compounds.

The lithium-based metal may comprise at least one selected from the group consisting of lithium metal and lithium alloy.

The carbon-based compound may comprise at least one selected from the group consisting of carbon, petroleum coke, activated carbon, and graphite.

When the electrode is a positive electrode, the electrode active material layer may comprise a lithium intercalation material. The lithium intercalation material may comprise a lithium transition metal oxide. The lithium transition metal oxide may comprise at least one selected from the group consisting of lithium manganese oxide, lithium cobalt oxide, lithium nickel oxide, lithium iron oxide, lithium nickel-manganese oxide, lithium nickel-cobalt oxide, and lithium nickel-manganese-cobalt oxide.

The electrolyte layer may be disposed on one side or both sides of the electrode current collector. The electrode current collector may comprise a first side and a second side facing the first side. The electrolyte layer may be disposed on the first side, the second side, or both the first side and the second side of the electrode current collector. The support layer may be disposed between the electrode current collector and the electrolyte layer.

The electrolyte layer and the support layer can prevent physical contact between the positive electrode and the negative electrode in the battery. The electrolyte layer can move charge media (e.g., lithium ions) of the battery between the electrodes.

The electrolyte layer may comprise a polymer component and an electrolyte solution. The electrolyte solution may be impregnated in the polymer component. The electrolyte solution may swell the polymer component. The polymer component may swell to exhibit a gel phase.

The electrolyte layer may comprise a curable composition. Specifically, the electrolyte layer may be formed by curing a curable composition. This curable composition may be referred to as a first composition and may be distinguished from the composition forming the support layer described later. The curing method may include, for example, thermal curing, photo-curing, and thermal-photo dual curing. Preferably, the curing method may be photo-curing.

The cured product of the composition may mean a product that has undergone a chemical process in which the composition becomes hard or solidified as the structure of the components contained in the composition changes due to chemical reactions between the components. The curing may be different from drying, which is a physical process in which a part of the composition dries or hardens as some components contained in the composition (for example, solvents such as water, volatile components) evaporate.

The first composition may comprise a binder and an electrolyte solution. When the first composition is cured, the binder may form a polymer component. The electrolyte solution may be impregnated in the polymer component. The polymer component may be a polymeric crosslinked structure.

The first composition may further comprise a crosslinking agent and an initiator. When the first composition is cured, the crosslinking agent may connect between the crosslinking agents, between the binders, and between the crosslinking agent and the binder to form a polymeric crosslinked structure. When an external force (heat, light, or heat and light) for curing the first composition is applied, the initiator can start the crosslinking reaction between the binder and the crosslinking agent.

The electrode of the present invention may comprise a plurality of inorganic particles having different properties. The electrode may comprise the plurality of inorganic particles as a layer (the support layer) separate from the electrolyte layer. The support layer may be disposed between the electrode current collector and the electrolyte layer. The support layer may comprise the plurality of inorganic particles. Specifically, the support layer may be formed by drying a composition comprising the plurality of inorganic particles. This composition may be referred to as a second composition and may be distinguished from the aforementioned first composition. The support layer may comprise a dried product of the second composition. The support layer can support the electrolyte layer and protect the electrode current collector and the electrode active material layer from external physical stimuli. As a result, the dielectric breakdown voltage of the support layer can increase while the ionic conductivity of the electrode is maintained.

The dried product of the composition may mean a product that has undergone a physical process in which a part of the composition dries or hardens as some components contained in the composition (for example, solvents such as water, volatile components) evaporate. The curing is a chemical process in which the composition becomes hard or solidified as the structure of the components contained in the composition changes due to chemical reactions between the components, and may be different from drying.

The second composition may comprise first inorganic particles and second inorganic particles. The first inorganic particles and the second inorganic particles may differ in particle size, particle shape, and density. The true density of the first inorganic particles may be the same as or different from the true density of the second inorganic particles. The true density of the first inorganic particles may be equal to or less than the true density of the second inorganic particles.

When the support layer comprises different inorganic particles in this manner, the electrolyte layer comprises a polymer component impregnated with an electrolyte solution, and the support layer and the electrolyte layer are configured as separate layers, the uniformity of the crosslinked structure within the electrolyte layer, specifically the pore structure within the electrolyte layer, may be improved. In addition, the damage to the electrode current collector and the electrode active material layer caused by lithium dendrites may be reduced.

In the present document, the uniform pore structure may mean a structure in which the average size, shape, and density of the pores are almost constant regardless of the position of the layer, so that the material movement path inside the layer can be maintained constant. The uniform pore structure may mean a state in which the size distribution and spatial distribution variation of the pores throughout the layer comprising the pores are small, the pores are continuously connected to each other, and the pores are not localized in a specific direction or position.

Although the detailed mechanism is not certain, the following is presumed. When the polymer component impregnated with the electrolyte solution and the inorganic particles are configured as the electrolyte layer and the support layer respectively, in the electrolyte layer, scattering by the inorganic particles during UV irradiation can be suppressed. Accordingly, the rate of the crosslinking reaction of the polymer component can be uniformly maintained regardless of the location within the electrolyte layer. In addition, the inorganic particles having different true densities can form a dense structure in the support layer. Accordingly, the current density applied to the electrode can be uniformly maintained regardless of the surface of application.

In the present document, the true density of a particle may mean a density calculated only from the mass and volume of the particle itself, excluding the void inside the particle. The true density of the inorganic particles may be a value known for the inorganic particles or a value measured according to a known method. The true density of the inorganic particles may be determined depending on the chemical composition of the inorganic particles.

The true density [g/cm³] of each of the first inorganic particles and the second inorganic particles may independently be within a range of 2 to 5. Preferably, the true density [g/cm³] of each of the first inorganic particles and the second inorganic particles may independently be within a range of 3 to 4.

The properties of the first inorganic particles and the second inorganic particles may be further controlled to form a more uniform pore structure of the electrolyte layer.

The green density of the first inorganic particles may be greater than the green density of the second inorganic particles.

In the present document, the green density (compact density) of a particle may mean the density of the particle in a state of being processed into a compact of a predetermined shape. The green density is a density that reflects not only the density of the particle itself but also the voids between the particles. The method of measuring the green density of the inorganic particles is described in detail in the Examples.

That is, in the second composition, the second inorganic particles may be disposed less densely, and the first inorganic particles may be disposed more densely. As a result, a structure in which the first inorganic particles fill the pores formed by the second inorganic particles may be formed in the support layer. When pores of uniform distribution are formed in the support layer, the ion conduction path becomes constant so that the electrical resistance of the electrode may decrease, the local current density variation is reduced so that the amount of lithium dendrite generation in the battery may decrease, and the mechanical properties of the electrode may be uniformly maintained.

The green density [g/cm³] of the first inorganic particles may be within a range of 1 to 3. Preferably, the green density [g/cm³] of the first inorganic particles may be within a range of 1.2 to 2.5. More preferably, the green density [g/cm³] of the first inorganic particles may be within a range of 1.3 to 1.5.

The green density [g/cm³] of the second inorganic particles may be within a range of 0.5 to 2.5. Preferably, the green density [g/cm³] of the second inorganic particles may be within a range of 0.7 to 1.5. More preferably, the green density [g/cm³] of the second inorganic particles may be within a range of 0.9 to 1.0.

The BET specific surface area of the first inorganic particles may be different from the BET specific surface area of the second inorganic particles. Preferably, the BET specific surface area of the first inorganic particles may be smaller than the BET specific surface area of the second inorganic particles.

The support layer may comprise inorganic particles having different BET specific surface areas to increase the impregnation amount of the electrolyte solution and at the same time stably maintain the pore structure to optimally maintain the ion conduction path. As a result, the battery comprising the electrode can mitigate electrolyte consumption or concentration variation, thereby improving its lifespan.

The BET specific surface area [m²/g] of the first inorganic particles may be within a range of 50 to 100. Preferably, the BET specific surface area [m²/g] of the first inorganic particles may be within a range of 55 to 85. More preferably, the BET specific surface area [m²/g] of the first inorganic particles may be within a range of 60 to 70.

The BET specific surface area [m²/g] of the second inorganic particles may be within a range of 70 to 150. Preferably, the BET specific surface area [m²/g] of the second inorganic particles may be within a range of 85 to 130. More preferably, the BET specific surface area [m²/g] of the second inorganic particles may be within a range of 95 to 105.

The relationship between the contents of the inorganic particles and the binder in the electrode, specifically in the first composition and the second composition, may be appropriately adjusted.

The content of the binder comprised in the first composition may be greater than the total content of the inorganic particles comprised in the second composition. The content of the binder among the components excluding the electrolyte solution in the first composition and the second composition may be greater than the content of the inorganic particles. In this case, the binder can form a more uniform polymeric crosslinked structure in the electrolyte layer.

In the present document, that the polymeric crosslinked structure is uniform may mean a state in which the variation by location of properties such as crosslinking density and gel fraction throughout the electrolyte layer is small, and electrochemical properties such as mechanical properties or ion conductivity do not change locally (within an error range).

Among the components excluding the electrolyte solution in the first composition and the second composition, the content of the inorganic particles may be greater than the content of the binder. The total content of the first inorganic particles and the second inorganic particles of the second composition may be greater than the binder content of the first composition. In this case, the inorganic particles can make the distribution of the current applied to the support layer constant to suppress dendrite growth, and accordingly the damage to the electrode current collector and the electrode active material layer can be reduced. As a result, the properties of the electrode such as heat resistance and impact resistance can also be improved.

The content ratio between the first inorganic particles and the second inorganic particles in the second composition may also be adjusted.

The content of the second inorganic particles of the second composition may be 5 wt% or more of the total content of the first inorganic particles and the second inorganic particles of the second composition. The content of the second inorganic particles may be 10 wt% or more, 15 wt% or more, 20 wt% or more, 25 wt% or more, or 30 wt% or more. The content of the second inorganic particles may be 50 wt% or less, 45 wt% or less, 40 wt% or less, 35 wt% or less, or 30 wt% or less.

The first inorganic particles and the second inorganic particles may be dispersed in the support layer. The first inorganic particles and the second inorganic particles may be disposed in a dispersed state in a layer separate from the electrolyte layer. The inorganic particles dispersed in this manner can form a uniform pore structure in the support layer due to the aforementioned relationships such as true density. The uniform pore structure of the support layer can increase the ion transfer performance of the electrode.

The relationship between the true densities of the first inorganic particles and the second inorganic particles may be determined depending on the chemical composition of the compounds constituting the first inorganic particles and the second inorganic particles. The chemical composition of the compounds constituting the first inorganic particles and the second inorganic particles may vary depending on whether they are involved in the transport of lithium ions in the battery.

The first inorganic particles and the second inorganic particles may each independently be involved in the transport of lithium ions, not be involved, or some part may be involved and the remaining part may not be involved. The first inorganic particles and the second inorganic particles may each independently comprise a lithium-containing metal oxide, a lithium-free metal oxide, or a combination thereof.

The lithium-containing metal oxide may comprise at least one selected from the group consisting of a lithium aluminum germanium phosphate (LAGP)-based compound, a lithium lanthanum zirconium oxide (LLZO)-based compound, a lithium aluminum titanium phosphate (LATP)-based compound, a lithium lanthanum zirconium tantalum oxide (LLZTO)-based compound, a lithium silicon titanium phosphate (LSTP)-based compound, and a lithium oxide.

The lithium-free metal oxide may comprise at least one selected from the group consisting of zinc oxide (ZnO), calcium carbonate (CaCO₃), silicon dioxide (SiO₂), alumina (Al₂O₃), boehmite (Al(O)OH), barium titanate (BaTiO₃), barium sulfate (BaSO₄), and titanium dioxide (TiO₂).

Preferably, the first inorganic particles and the second inorganic particles may comprise boehmite.

The relationship between the green densities of the first inorganic particles and the second inorganic particles may be determined depending on the shape and size of each of the first inorganic particles and the second inorganic particles. As described above, the shape of the first inorganic particles may be different from the shape of the second inorganic particles.

The first inorganic particles may be polygonal inorganic particles.

The second inorganic particles may be polygonal inorganic particles, needle-shaped inorganic particles, or plate-shaped inorganic particles. Preferably, the second inorganic particles may be needle-shaped inorganic particles or plate-shaped inorganic particles. More preferably, the second inorganic particles may be needle-shaped inorganic particles.

In the present document, polygonal particles may refer to polyhedron-shaped particles whose outline is composed of multiple straight lines. When the maximum length, maximum width, and maximum thickness of the polygonal particles are L, W, and T respectively, L/W and W/T may each be within a range of 1 to 3. The shape of the polyhedron constituting the polygonal particles is not particularly limited. The polygonal particles may be particles having a polyhedral shape and satisfying the conditions of the aforementioned L, W, and T.

In the present document, needle-shaped particles may refer to particles in a thin and long shape like a needle or fiber, whose length is much longer than the thickness or width. When the maximum length, maximum width, and maximum thickness of the needle-shaped particles are L, W, and T respectively, L/W or L/T may be 3 or more.

In the present document, plate-shaped particles may refer to particles in a flat shape like a plate, whose thickness is much thinner than the length or width. When the maximum length, maximum width, and maximum thickness of the plate-shaped particles are L, W, and T respectively, L/T or W/T may be 3 or more.

The size of each of the first inorganic particles and the second inorganic particles may also be adjusted considering the magnitude relationship between the true density and the green density of each inorganic particle, or the like.

The average size of the first inorganic particles may be within a range of 100 nm to 500 nm. Preferably, the average size of the first inorganic particles may be within a range of 150 nm to 450 nm. More preferably, the average size of the first inorganic particles may be within a range of 200 nm to 400 nm. Most preferably, the average size of the first inorganic particles may be within a range of 250 nm to 350 nm.

Preferably, the second inorganic particles are needle-shaped particles, and the transverse length and the longitudinal length of each of the second inorganic particles may be adjusted. The longitudinal length of the second inorganic particles may be longer than the transverse length of the second inorganic particles.

The average longitudinal length of the second inorganic particles may be within a range of 100 nm to 200 nm. Preferably, the average longitudinal length of the second inorganic particles may be within a range of 130 nm to 170 nm. More preferably, the average longitudinal length of the second inorganic particles may be within a range of 150 nm to 160 nm.

The average transverse length of the second inorganic particles may be within a range of 25 nm to 50 nm. Preferably, the average transverse length of the second inorganic particles may be within a range of 30 nm to 45 nm. More preferably, the average transverse length of the second inorganic particles may be within a range of 35 nm to 40 nm.

The longitudinal length of the second inorganic particles may mean the maximum length of the second inorganic particles. The transverse length of the second inorganic particles may mean the longer length among the dimensions measured in the direction perpendicular to the longitudinal direction.

The average longitudinal length of the second inorganic particles may be measured using an electron microscope image of the second inorganic particles. The average of the maximum length of each second inorganic particle confirmed in the electron microscope image with respect to the number of inorganic particles may be the average longitudinal length of the second inorganic particles. In addition, the average of the length in the direction perpendicular to the maximum length of each second inorganic particle measured in the electron microscope image with respect to the number of inorganic particles may be the average transverse length of the second inorganic particles.

The binder may constitute the skeleton in the electrolyte layer formed by the first composition. The binder has appropriate crystallinity and polarity, and can allow the composite electrolyte to exhibit appropriate ionic conductivity. In particular, the polar portion of the binder may bond with the crosslinking agent described later. At this time, the binder may form a crosslinked structure in the electrolyte layer.

The binder may comprise a fluorine-based binder. The fluorine-based binder may refer to a binder whose constituent unit comprises fluorine in part or in whole. The fluorine-based binder may comprise a PVDF-based binder.

The PVDF-based binder may be a homopolymer or copolymer comprising a polymerization unit derived from vinylidene fluoride. The fluorine-based binder may comprise a first unit derived from vinylidene fluoride and a second unit derived from a fluorine-containing alkyl vinyl compound. The PVDF-based binder may be a block copolymer or a random copolymer comprising the first unit and the second unit. Preferably, the PVDF-based binder may be a random copolymer comprising the first unit and the second unit.

The fluorine-containing alkyl vinyl compound may refer to a compound in which at least one fluorine-containing alkyl group represented by CₙH_{(2n+1-y})F_{y} is bonded to a vinyl group. However, vinylidene fluoride is excluded here.

The fluorine-containing alkyl vinyl compound may comprise at least one selected from the group consisting of vinyl fluoride, trifluoroethylene, tetrafluoroethylene, chlorotrifluoroethylene, and hexafluoropropylene. Preferably, the fluorine-containing alkyl vinyl compound may comprise at least one selected from the group consisting of hexafluoropropylene, tetrafluoroethylene, and chlorotrifluoroethylene. More preferably, the fluorine-containing alkyl vinyl compound may comprise hexafluoropropylene.

The content of the second unit of the fluorine-based binder may be adjusted. The content of the second unit of the fluorine-based binder may affect the crystallinity of the fluorine-based binder, and the ion conductivity and mechanical strength of the battery.

The content of the second unit of the fluorine-based binder may be within a range of 10 wt% to 50 wt%. Preferably, the content of the second unit of the fluorine-based binder may be within a range of 20 wt% to 45 wt%. More preferably, the content of the second unit of the fluorine-based binder may be within a range of 25 wt% to 40 wt%. Even more preferably, the content of the second unit of the fluorine-based binder may be within a range of 30 wt% to 35 wt%.

The contents of the first unit and the second unit of the fluorine-based binder can be measured by 19F-NMR analysis of the fluorine-based binder.

The weight average molecular weight of the fluorine-based binder may also be adjusted. The weight average molecular weight of the fluorine-based binder may be within a range of 300,000 g/mol to 1,000,000 g/mol. Preferably, the weight average molecular weight of the fluorine-based binder may be within a range of 350,000 g/mol to 800,000 g/mol. More preferably, the weight average molecular weight of the fluorine-based binder may be within a range of 450,000 g/mol to 600,000 g/mol. Even more preferably, the weight average molecular weight of the fluorine-based binder may be within a range of 500,000 g/mol to 550,000 g/mol.

The weight average molecular weight of the fluorine-based binder can be measured by gel permeation chromatography.

The melting point of the fluorine-based binder may also be adjusted. The melting point of the fluorine-based binder may be within a range of 100 °C to 140 °C. Preferably, the melting point of the fluorine-based binder may be within a range of 105 °C to 135 °C. More preferably, the melting point of the fluorine-based binder may be within a range of 110 °C to 130 °C. Even more preferably, the melting point of the fluorine-based binder may be within a range of 115 °C to 125 °C.

The melting point of the fluorine-based binder can be measured by differential scanning calorimetry (DSC).

The crosslinking agent may form a crosslinked structure by itself or together with the binder.

The crosslinked structure may be formed by bonding between the functional group of the binder and the functional group of the crosslinking agent. The crosslinking agent may have a photoreactive functional group. The crosslinked structure formed by the binder may be formed by bonding between the functional group of the binder and the photoreactive functional group. The crosslinked structure formed by the binder may be formed by applying an external force to the first composition. Specifically, the crosslinked structure may be formed by applying heat or light to the first composition. More specifically, the crosslinked structure may be formed by applying light to the first composition.

The crosslinked structure may be formed by bonding at least two binders via a crosslinking agent, or by bonding the crosslinking agents to each other. Since the crosslinking agent acts as a mediator, the crosslinking agent may comprise a polyfunctional crosslinking agent. The crosslinking agent may comprise two or more crosslinkable functional groups. The crosslinkable functional group may be a functional group involved in the above crosslinked structure.

The crosslinking agent may comprise two or more of the photoreactive functional group. The crosslinking agent may comprise a (meth)acrylate group as the photoreactive functional group. The crosslinking agent may comprise a polyfunctional (meth)acrylate. The crosslinking agent may comprise a compound comprising at least two (meth)acrylate groups.

The (meth)acrylate group may mean an acrylate group or a methacrylate group. The (meth)acrylate group may mean a monovalent functional group derived from an ester of (meth)acrylic acid.

The crosslinking agent may comprise polyfunctional crosslinking agents having different numbers of functional groups. The crosslinking agent may comprise a first polyfunctional crosslinking agent and a second polyfunctional crosslinking agent, and the number of functional groups of the first polyfunctional crosslinking agent may be greater than the number of functional groups of the second polyfunctional crosslinking agent.

In the present document, the number of crosslinkable functional groups of each crosslinking agent may mean the number of crosslinkable functional groups per molecule of each crosslinking agent.

The number of functional groups of the first polyfunctional crosslinking agent may be 3 or more. The number of functional groups of the second polyfunctional crosslinking agent may be 2 or more.

The first polyfunctional crosslinking agent may be a monomeric crosslinking agent. The second polyfunctional crosslinking agent may be a polymeric crosslinking agent.

The monomeric crosslinking agent may mean one in which the moiety other than the crosslinkable functional group is derived from a monomer. The polymeric crosslinking agent may mean one in which the moiety other than the crosslinkable functional group is derived from a polymer.

The first polyfunctional crosslinking agent may comprise at least one selected from the group consisting of trimethylolpropane triacrylate (TMPTA), trimethylolpropane trimethacrylate (TMPTMA), pentaerythritol triacrylate (PETA), and pentaerythritol trimethacrylate (PETMA). Preferably, the first polyfunctional crosslinking agent may comprise trimethylolpropane triacrylate (TMPTA).

The second polyfunctional crosslinking agent may comprise at least one selected from the group consisting of polyethylene glycol diacrylate (PEGDA), polyethylene glycol dimethacrylate (PEGDMA), polyurethane diacrylate (PUDA), and polyurethane dimethacrylate (PUDMA). Preferably, the second polyfunctional crosslinking agent may comprise polyurethane diacrylate.

When the second polyfunctional crosslinking agent is a polymeric crosslinking agent, the molecular weight of the second polyfunctional crosslinking agent may also be adjusted. The second polyfunctional crosslinking agent may comprise at least one selected from the group consisting of polyethylene glycol diacrylate having a molecular weight within a range of 400 Da to 700 Da and polyurethane diacrylate having a molecular weight within a range of 1400 Da to 2100 Da.

The initiator (thermal polymerization initiator or photopolymerization initiator) can form the crosslinked structure of the polymer component derived from the binder. Preferably, the first composition may comprise a photopolymerization initiator.

The photopolymerization initiator may comprise at least one selected from the group consisting of a short-wavelength photopolymerization initiator and a long-wavelength photopolymerization initiator.

The short-wavelength photopolymerization initiator may comprise at least one selected from the group consisting of IRGACURE 127 (1,1'-(Methylene-di-4,1-phenylene)bis[2-hydroxy-2-methyl-1-propanone]), IRGACURE 1173 (2-Hydroxy-2-methylpropiophenone, HMPP), DMPA (2,2-dimethoxy-2-phenylacetophenone), HOMPP (2-hydroxy-2-methylpropiophenone), and LAP (Lithium phenyl-2,4,6-trimethylbenzoylphosphinate).

The long-wavelength photopolymerization initiator may comprise at least one selected from the group consisting of Bis(2,4,6-trimethylbenzoyl)-phenylphosphineoxide and Ethyl (2,4,6-trimethylbenzoyl) phenylphosphinate.

The electrolyte solution may be impregnated in the binder, specifically the polymer component, more specifically the polymeric crosslinked structure formed by the binder. The electrolyte solution may comprise a non-aqueous solvent, a lithium salt, and an electrolyte additive. The lithium salt may be dissolved in the non-aqueous solvent.

The non-aqueous solvent may refer to an organic solvent that does not contain water or contains water in a trace amount even if water is included. The non-aqueous solvent may comprise at least one selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), and gamma butyrolactone (γ-butyrolactone).

As the solvent of the electrolyte solution of a lithium secondary battery, a carbonate-based solvent may generally be used. The non-aqueous solvent may comprise at least one selected from the group consisting of propylene carbonate (PC), ethylene carbonate (EC), diethyl carbonate (DEC), dimethyl carbonate (DMC), and dipropyl carbonate (DPC).

Preferably, the non-aqueous solvent may comprise ethylene carbonate and ethyl methyl carbonate. More preferably, the non-aqueous solvent may comprise ethylene carbonate and ethyl methyl carbonate, and the non-aqueous solvent may comprise more ethyl methyl carbonate than ethylene carbonate.

The lithium salt may refer to a material that decomposes into lithium cations and anions upon dissociation. The lithium salt may comprise at least one selected from the group consisting of LiPF₆, LiBF₄, LiCl, LiBr, LiI, LiClO₄, LiAsF₆, LiCH₃CO₂, LiCF₃SO₃, LiN(CF₃SO₂)₂, LiN(FSO₂)₂, and LiC(CF₂SO₂)₃. Preferably, the lithium salt may comprise LiN(CF₃SO₂)₂.

The electrolyte additive may refer to a substance applied in a small amount to an electrolyte solution for purposes such as stabilization of the electrode interface, improvement of electrochemical stability, adjustment of conductive properties, improvement of temperature characteristics, and suppression of gas generation. The electrolyte additive may comprise at least one selected from the group consisting of vinylene carbonate (Vinylene Carbonate), 1,3-propane sultone (1,3-propane sultone), 1,3-propene sultone (1,3-propene sultone), lithium difluorophosphate (Lithium Difluorophosphate), lithium tetrafluoro(oxalato)phosphate (Lithium Tetrafluoro(oxalate)phosphate), lithium bis(fluorosulfonyl)imide (Lithium Bis(fluorosulfonyl)imide), fluoroethylene carbonate (Fluoro Ethylene Carbonate), and vinyl ethylene carbonate (Vinyl Ethylene Carbonate). Preferably, the electrolyte additive may comprise vinylene carbonate.

The second composition may further comprise a binding binder. The binding binder may bind the inorganic particles or bind the inorganic particles to the support layer.

The binding binder may comprise at least one selected from the group consisting of polymethyl methacrylate, polybutyl acrylate, polybutyl methacrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose. Preferably, the binding binder may comprise at least one selected from the group consisting of polymethyl methacrylate, polybutyl acrylate, polybutyl methacrylate, cellulose acetate, cellulose acetate butyrate, cellulose acetate propionate, and carboxyl methyl cellulose.

Since the electrolyte solution is impregnated in the binder or the crosslinked structure formed by the binder in the electrolyte layer, the thickness of the electrolyte layer may generally be thick. Specifically, the electrolyte layer may be thicker than the support layer and the electrode current collector. Here, the thickness of the electrolyte layer means the thickness per layer.

The inorganic particles may also be disposed in an appropriate density relationship in the support layer to form a predetermined layered structure. At this time, the thickness of the support layer may be greater than the thickness of the electrode current collector. The thickness of the support layer may be smaller than the thickness of the electrolyte layer.

As a method of forming the support layer and the electrolyte layer on the electrode current collector, drying of the second composition and UV curing of the first composition may be applied. Drying of the composition is a process of leaving the composition at room temperature or heating it to an appropriate temperature to volatilize or evaporate the liquid in the composition. UV curing can form a crosslinked structure between binders, between binder and crosslinking agent, and between crosslinking agents in the composition by an external force.

In the electrode of the present invention, the process of forming the support layer by drying the second composition and the process of forming the electrolyte layer by UV curing the first composition may proceed sequentially. The above process may comprise the following steps. The number of each step does not refer to the order of each step:
(1) preparing a second composition comprising first inorganic particles, second inorganic particles, a dispersion medium, and a binding binder;
(2) preparing a first composition comprising a binder, a crosslinking agent, a photopolymerization initiator, and an electrolyte solution;
(3) applying and drying the second composition on one side or both sides of an electrode (comprising an electrode current collector and an electrode active material layer on one side or both sides thereof) to form a support layer;
(4) applying the first composition on the support layer;
(5) irradiating UV to the first composition.

In the (1) and (2) processes, the preparation of the composition may include directly preparing the composition or applying a previously prepared composition.

Conditions such as the application method and thickness of each composition are not particularly limited.

The conditions of UV irradiated to the first composition are not particularly limited.

Another embodiment of the present invention is also an electrode.

In the description of the electrode mentioned in the electrode of this embodiment, contents that overlap with the description of the electrode of the previous embodiment may be omitted.

The electrode of this embodiment may comprise an electrode current collector, an electrolyte layer, an electrode active material layer, and a support layer.

The electrolyte layer may be disposed on one side or both sides of the electrode current collector. The electrode active material layer may be disposed between the electrode current collector and the electrolyte layer. The support layer may be disposed between the electrode active material layer and the electrolyte layer.

The electrode of the previous embodiment may mainly deal with each of the first composition used to form the electrolyte layer and the second composition used to form the support layer. The electrode of this embodiment may mainly deal with each of the electrolyte layer and the support layer themselves.

In the electrode of this embodiment, the electrolyte layer may comprise a polymeric crosslinked structure and an electrolyte solution. The electrolyte solution may be impregnated in the polymeric crosslinked structure.

The polymeric crosslinked structure may be formed by the crosslinking reaction of the binder, the crosslinking agent, and the initiator of the aforementioned first composition. The polymeric crosslinked structure may comprise components derived from each of the binder, the crosslinking agent, and the initiator. The description of the binder, the crosslinking agent, and the initiator is the same as described in the electrode of the previous embodiment.

In the present document, a component derived from a specific substance may comprise the component itself or a derivative thereof.

The electrolyte solution may be impregnated in the polymeric crosslinked structure.

The support layer may comprise inorganic particles. The inorganic particles may comprise a plurality of different inorganic particles. The inorganic particles may comprise first inorganic particles and second inorganic particles. The first inorganic particles may be different from the second inorganic particles. The description of the two different inorganic particles is the same as described in the electrode of the previous embodiment.

In the electrode of this embodiment, the true density of the first inorganic particles may be equal to or less than the true density of the second inorganic particles, similar to the electrode of the previous embodiment.

The electrode of this embodiment is different from existing electrodes in that it does not comprise a polymer substrate layer. Generally, a polymer substrate layer may be disposed between an electrode active material layer and an inorganic coating layer. In the electrode of this embodiment, no separate layer may be disposed between the electrode active material layer and the support layer (comprising an inorganic material). The electrode active material layer and the support layer may be in contact with each other.

The chemical compositions of the first inorganic particles and the second inorganic particles are also the same as those mentioned in the electrode of the previous embodiment.

Preferably, the first inorganic particles and the second inorganic particles may each independently comprise alumina (Al₂O₃) or boehmite (AlO(OH)). More preferably, the first inorganic particles and the second inorganic particles may comprise boehmite (AlO(OH)).

The shapes of the first inorganic particles and the second inorganic particles are also the same as those mentioned in the electrode of the previous embodiment.

The first inorganic particles may be polygonal inorganic particles.

The second inorganic particles may be polygonal inorganic particles, needle-shaped inorganic particles, or plate-shaped inorganic particles. Preferably, the second inorganic particles may be needle-shaped inorganic particles or plate-shaped inorganic particles.

As described above, since the electrolyte solution is impregnated in the polymeric crosslinked structure in the electrolyte layer, the thickness of the electrolyte layer may generally be thick. Specifically, the electrolyte layer may be thicker than the electrode current collector and the support layer. The thickness of the electrolyte layer means the thickness per layer.

In addition, in the electrode, all the layers other than the electrode current collector may be thicker than the electrode current collector. The sum of the thickness per layer of the electrolyte layer and the thickness per layer of the support layer may be greater than the thickness of the electrode current collector layer.

Another embodiment of the present invention is a battery.

The battery may refer to a lithium secondary battery. The lithium secondary battery may refer to a lithium metal secondary battery, a lithium ion secondary battery, a lithium polymer secondary battery, a lithium ion polymer secondary battery, and the like. More specifically, the battery may be a lithium ion secondary battery.

The battery may comprise a first electrode and a second electrode. The polarity of the first electrode may be opposite to the polarity of the second electrode. That is, if the first electrode is the positive electrode (negative electrode), the second electrode may be the negative electrode (positive electrode). Only the first electrode, only the second electrode, or both the first electrode and the second electrode may comprise the electrode of the present invention.

Therefore, yet another embodiment of the present invention is a battery comprising a positive electrode and a negative electrode, wherein at least one of the positive electrode and the negative electrode comprises an electrode current collector; an electrolyte layer disposed on one side or both sides of the electrode current collector; an electrode active material layer disposed between the electrode current collector and the electrolyte layer; and a support layer disposed between the electrode active material layer and the electrolyte layer, the electrolyte layer comprises a polymeric crosslinked structure and an electrolyte solution impregnated in the polymeric crosslinked structure, the support layer comprises first inorganic particles and second inorganic particles, and the true density of the first inorganic particles is equal to or less than the true density of the second inorganic particles. The positive electrode may be an electrode that performs a reduction reaction during discharging. The negative electrode may be an electrode that performs an oxidation reaction during discharging.

In the battery of the present invention, no separate polymer substrate layer is disposed between the positive electrode and the negative electrode. Here, the polymer substrate layer may mean a polyolefin-based film used as the polymer substrate layer of an existing separator. Accordingly, the support layer may be disposed between the electrolyte layer and the positive electrode active material layer and/or between the electrolyte layer and the negative electrode active material layer.

In a battery, the area of the system formed by the separator and the electrolyte solution may generally be larger than the area of the negative electrode. In addition, the area of the negative electrode may be larger than the area of the positive electrode. That is, since the area of the negative electrode is larger than the area of the positive electrode, having the negative electrode be the electrode of the present invention can lower the probability of short circuit in the battery. Therefore, in the battery of the present invention, only the negative electrode may comprise the electrode of the present invention. FIG. 2 is a schematic view of the battery of the present invention in this case.

Referring to FIG. 2, the first electrode may be the positive electrode, and the second electrode may be the negative electrode. The positive electrode may comprise a positive electrode current collector (PEC) and a positive electrode active material layer (PAM) disposed on one side or both sides of the positive electrode current collector (PEC).

Referring to FIG. 2, the negative electrode may comprise a negative electrode current collector (NEC); a negative electrode electrolyte layer (NEL) disposed on one side or both sides of the negative electrode current collector (NEC); a negative electrode active material layer (NAM) disposed between the negative electrode current collector (NEC) and the negative electrode electrolyte layer (NEL); and a negative electrode support layer (NSP) disposed between the negative electrode active material layer (NAM) and the negative electrode electrolyte layer (NEL).

The positive electrode active material layer (PAM) may comprise a positive electrode active material. The negative electrode active material layer (NAM) may comprise a negative electrode active material.

The description of the negative electrode electrolyte layer (NEL) is the same as the description of the electrolyte layer of the electrode of the previous embodiment. The negative electrode electrolyte layer (NEL) may comprise a first polymeric crosslinked structure and a first electrolyte solution impregnated in the first polymeric crosslinked structure.

The description of each of the first polymeric crosslinked structure and the first electrolyte solution is the same as the description of each of the polymeric crosslinked structure and the electrolyte solution of the electrode of the previous embodiment.

The description of the negative electrode support layer (NSP) may be the same as the description of the support layer of the electrode of the previous embodiment. The negative electrode support layer (NSP) may comprise first inorganic particles and second inorganic particles. The true density of the first inorganic particles may be equal to or less than the true density of the second inorganic particles.

Referring to FIG. 2, the positive electrode active material layer (PAM) and the negative electrode electrolyte layer (NEL) may face each other. Specifically, the positive electrode active material layer (PAM) and the negative electrode electrolyte layer (NEL) may be in contact with each other.

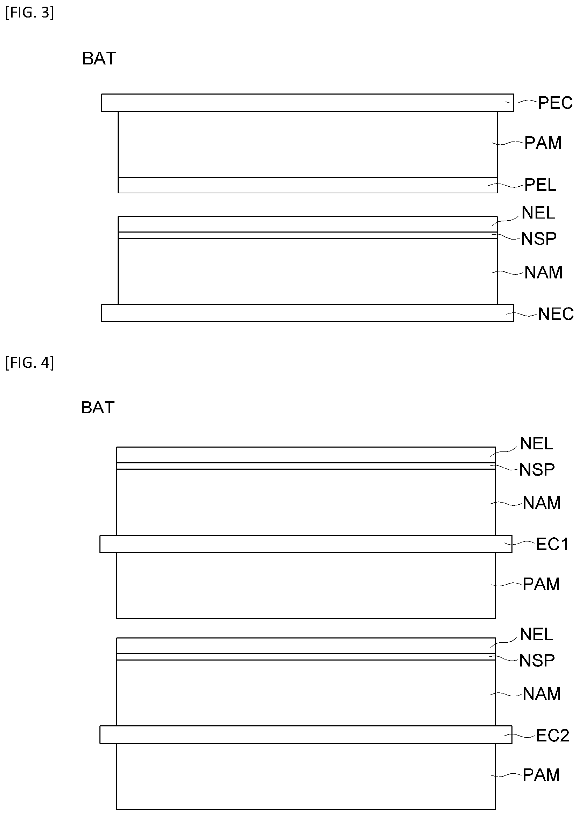

FIG. 3 is a schematic view of another exemplary battery (BAT) of the present invention. The positive electrode may be composited with a gel electrolyte. The negative electrode may comprise the electrode of the embodiment of the present invention.

Referring to FIG. 3, the positive electrode may further comprise a positive electrode electrolyte layer (PEL) in addition to the positive electrode current collector (PEC) and the positive electrode active material layer (PAM). The positive electrode active material layer (PAM) may be disposed between the positive electrode current collector (PEC) and the positive electrode electrolyte layer (PEL). The positive electrode electrolyte layer (PEL) may comprise a second polymeric crosslinked structure and a second electrolyte solution impregnated in the second polymeric crosslinked structure.

The compositions of the first polymeric crosslinked structure and the second polymeric crosslinked structure may be the same as or different from each other. Preferably, the compositions of the first polymeric crosslinked structure and the second polymeric crosslinked structure may be different. More preferably, the first polymeric crosslinked structure may comprise components derived from a binder, a crosslinking agent, and an initiator, and the second polymeric crosslinked structure may comprise components derived from a crosslinking agent and an initiator.

The description of each of the binder, the crosslinking agent, and the initiator is the same as the description of each of the binder, the crosslinking agent, and the initiator of the composite electrolyte of the previous embodiment.

The compositions of the first electrolyte solution and the second electrolyte solution may be the same as or different from each other. Preferably, the compositions of the first electrolyte solution and the second electrolyte solution may be the same.

Referring to FIG. 3, the positive electrode electrolyte layer (PEL) and the negative electrode electrolyte layer (NEL) may face each other. Specifically, the positive electrode electrolyte layer (PEL) and the negative electrode electrolyte layer (NEL) may be in contact with each other.

Referring to FIG. 3, the positive electrode active material layer (PAM) and the negative electrode active material layer (NAM) may each independently further comprise the second polymeric crosslinked structure and a second electrolyte solution impregnated in the second polymeric crosslinked structure.

The battery (BAT) may be a bipolar battery. In a bipolar battery, the bipolar electrode may comprise a positive electrode (negative electrode) on one side of the current collector and a negative electrode (positive electrode) on the other side. The bipolar battery may comprise a separator disposed between sequentially stacked bipolar electrodes. The battery of the present invention may adopt a configuration similar to the electrode of the previous embodiment as a combination of this separator and any one electrode. FIG. 4 is a schematic view of this battery.

Referring to FIG. 4, the battery of the present invention may comprise a first electrode and a second electrode that face each other.

Referring to FIG. 4, the first electrode may comprise a first electrode current collector, a negative electrode electrolyte layer disposed on one side of the first electrode current collector, a positive electrode active material layer disposed on the other side of the first electrode current collector, a negative electrode active material layer disposed between the first electrode current collector and the negative electrode electrolyte layer, and a negative electrode support layer disposed between the negative electrode electrolyte layer and the negative electrode active material layer.

Referring to FIG. 4, the second electrode may comprise a second electrode current collector, a negative electrode electrolyte layer disposed on one side of the second electrode current collector, a positive electrode active material layer disposed on the other side of the second electrode current collector, a negative electrode active material layer disposed between the second electrode current collector and the negative electrode electrolyte layer, and a negative electrode support layer disposed between the negative electrode electrolyte layer and the negative electrode active material layer.

The positive electrode active material layer (PAM) may comprise a positive electrode active material. The negative electrode active material layer (NAM) may comprise a negative electrode active material.

The negative electrode electrolyte layer and the negative electrode support layer may be the same as the electrolyte layer and the support layer mentioned in the electrode of the previous embodiment.

The negative electrode electrolyte layer may comprise a first polymeric crosslinked structure and a first electrolyte solution impregnated in the first polymeric crosslinked structure. The negative electrode support layer comprises first inorganic particles and second inorganic particles, and the true density of the first inorganic particles may be equal to or less than the true density of the second inorganic particles.

Referring to FIG. 4, the positive electrode active material layer (PAM) and the negative electrode electrolyte layer (NEL) may face each other. Specifically, the positive electrode active material layer (PAM) and the negative electrode electrolyte layer (NEL) may be in contact with each other.

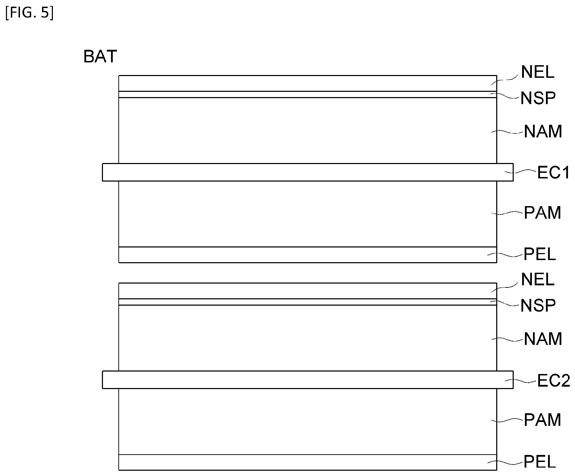

The positive electrode portion of each of the first electrode and the second electrode may be composited with a gel electrolyte. The negative electrode portion of each of the first electrode and the second electrode may have a structure similar to the electrode of the embodiment of the present invention. FIG. 5 is a schematic view of the battery in this case.

Referring to FIG. 5, the first electrode and the second electrode may further comprise a positive electrode electrolyte layer (PEL) in addition to the positive electrode current collector (PEC) and the positive electrode active material layer (PAM). The positive electrode active material layer (PAM) may be disposed between the positive electrode current collector (PEC) and the positive electrode electrolyte layer (PEL). The positive electrode electrolyte layer (PEL) may comprise a second polymeric crosslinked structure and a second electrolyte solution impregnated in the second polymeric crosslinked structure.

Referring to FIG. 5, the positive electrode electrolyte layer (PEL) and the negative electrode electrolyte layer (NEL) may face each other. Specifically, the positive electrode electrolyte layer (PEL) and the negative electrode electrolyte layer (NEL) may be in contact with each other.

The positive electrode active material layer (PAM) and the negative electrode active material layer (NAM) may each independently further comprise the second polymeric crosslinked structure and a second electrolyte solution impregnated in the second polymeric crosslinked structure. The description of the second polymeric crosslinked structure and the second electrolyte solution is the same as described above.

### MODE FOR CARRYING OUT INVENTION

Hereinafter, the present document describes the present invention in more detail with Examples and Comparative Examples. However, the present document does not limit the present invention to the Examples.

### [Test Methods]

### 1. SEM photographing of inorganic particles

The shape and size of the inorganic particles used in the preparation of the composite electrolytes of the Examples and Comparative Examples were confirmed by SEM images. The SEM images were photographed by the following procedure.
(1) A dispersion in which 5 wt% of inorganic particles were dispersed in ethanol by ultrasonication (using UCP-10 of Lab Companion, 300 W, 40 kHz, 10 minutes, 25 °C) is prepared.
(2) 1 mL of the dispersion was applied with a dropper onto a substrate film (36 µm PET) and dried in a convection oven (no nitrogen or vacuum treatment, 80 °C, 10 minutes).
(3) The dried film was attached to the SEM equipment (FESEM-JSM7610F-plus, JEOL Co.) holder via carbon tape (T01-215-015 of NISSHIN EM Co., Ltd.).
(4) Images were photographed with the SEM equipment (acceleration voltage: 5 kV, working distance: 8.3-8.5 mm, SEM mode, magnification: 30,000 or 50,000).
(5) The shape of the inorganic particles confirmed in the obtained SEM images was determined in the following manner. IMAGE J software was used. 50 inorganic particles were selected per SEM image.
   1) Needle-shaped particles: when the maximum length, maximum width, and maximum thickness are L, W, and T respectively, those with L/W or L/T of 3 or more
   2) Plate-shaped particles: when the maximum length, maximum width, and maximum thickness of the particles are L, W, and T respectively, those with L/T or W/T of 3 or more
   3) Polygonal particles: when the maximum length, maximum width, and maximum thickness are L, W, and T respectively, those with L/W and W/T each within a range of 1 to 3
(6) The size of the inorganic particles confirmed in the obtained SEM images was measured in the following manner. IMAGE J software was used. 50 inorganic particles were selected per SEM image.
   1) Needle-shaped particles or plate-shaped particles: the average longitudinal length is determined as the average of the maximum length of each inorganic particle with respect to the number of inorganic particles. The average transverse length is determined as the average of the length in the direction perpendicular to the maximum length of each inorganic particle with respect to the number of inorganic particles.
   2) Polygonal particles: the average size is determined as the average of the maximum length of each inorganic particle with respect to the number of inorganic particles.

### 2. Green density measurement of inorganic particles

The green density of the inorganic particles was measured according to the following procedure.
(1) The inorganic particles are pretreated by vacuum drying (80 °C, 6 hours) and subsequent aging (Aging; 25 °C, 7 days).
(2) 1 g of the pretreated inorganic particles is introduced into a cylindrical mold with a diameter of 16 mm.
(3) Subsequently, a pressure of 1 ton/cm² is applied to the cylindrical mold to prepare a specimen in the form of a green pellet. The pressure application conditions are as follows.
   Pressure application equipment: CARVER Co. hydraulic press 4386,
   Applied load holding time: 30 seconds
   Number of compressions: 1 time
(4) The thickness at the center of the specimen is measured 3 times with Mitutoyo's CD-15APX, and the volume of the specimen is calculated.
(5) The green density of the inorganic particles is calculated using the volume of the specimen measured in (4) above and the weight of the specimen (1 g).

### 3. Specific surface area measurement of inorganic particles

The Brunauer-Emmett-Teller (BET) specific surface area by nitrogen adsorption/desorption of the inorganic particles was measured according to the following procedure.
(1) 1.3 mg of an inorganic particle sample is pretreated (vacuum, 105 °C, 6 hours).
(2) The sample pretreated in (1) is introduced into a sample cell (MICROTRAC Co., BET MAX STD Sample cell).
(3) The BET specific surface area of the particles in the sample cell was measured with a specific surface area analyzer (BEL Japan Inc., BELSORP-max). An air oven was mounted on the analyzer and its temperature was maintained at 40 °C.

### 4. Dielectric breakdown voltage measurement of the support layer

(1) A voltage with a voltage rise rate of 100 V/sec is applied to the negative electrode semi-finished product (laminated structure of the negative electrode current collector / active material layer / support layer) obtained in the Examples and Comparative Examples with a Hi-pot tester (Chroma 19055).
(2) The maximum voltage allowed before dielectric breakdown occurs is measured.
(3) The dielectric breakdown voltage (kV/mil) of the support layer is calculated by dividing the measured maximum voltage by the thickness of the support layer.

### 5. Ionic conductivity of the support layer

The ionic conductivity of the support layers of the Examples and Comparative Examples was calculated through electrical resistance measurement of the negative electrodes of the Examples and Comparative Examples using electrochemical impedance spectroscopy (EIS) and conversion using the Nyquist plot method. The specimen is a 2016 coin cell prepared by punching the negative electrode to a size of 19 pi. The electrical resistance measurement was performed under AC voltage conditions of an amplitude of 10 mV and a frequency of 1,000,000 to 1,000 Hz. The ionic conductivity value was determined by substituting the thickness and area of the support layer and as the average of the measured values for 5 samples of each.

### 6. Capacity and cycle performance of the battery

(1) Cycling of the batteries of the Examples and Comparative Examples was performed. The cycling was performed at room temperature and 2.2 to 3.8 V at 0.1 C-rate.
(2) Subsequently, cycling was repeated 10 times, and the charge capacity, discharge capacity, and discharge capacity retention were measured by the capacity retention measured at this time.

### [Preparation of Electrode and Battery]

### Example 1. Electrode and battery

### (1) Negative electrode

1) A negative electrode material composition is prepared by mixing in water components composed of 95.6 wt% of a material composed of 100 wt% of a graphite-based material in which artificial graphite and natural graphite are mixed in a weight ratio of 5:5 as the negative electrode active material; 1 wt% of acetylene black as the conductive material; 1.1 wt% of carboxymethyl cellulose (CMC) as the first binder; and 2.3 wt% of styrene butadiene rubber (SBR) as the second binder.
2) The negative electrode material composition is applied with a comma coater on one side of a copper current collector with a thickness of 10 µm, and then dried at 130 °C and rolled to prepare a negative electrode plate in which the negative electrode active material layer is laminated. The porosity and thickness of the negative electrode active material layer were 28% and 78 µm, respectively.
3) Polygonal boehmite (Disperal 60 of Sasol; AlO(OH); true density: 3.03 g/cm³; green density: 1.35 g/cm³; BET specific surface area by nitrogen adsorption/desorption: 63 m²/g; average size: 350 nm) as the first inorganic particles and needle-shaped boehmite (LM37 of Tianjin Bihailantian Waterbased Polymer Materials Co., Ltd.; AlO(OH); true density: 3.03 g/cm³; green density: 0.99 g/cm³; BET specific surface area by nitrogen adsorption/desorption: 101 m²/g; average transverse length: 35 nm; average longitudinal length: 155 nm) as the second inorganic particles are prepared.
4) A dispersion in which a mixture of 9.0 g of the first inorganic particles and 1.0 g of the second inorganic particles is dispersed in 10 g of N-methyl-pyrrolidone (NMP) is prepared.
5) PVDF-HFP (Kynar LBG of Arkema, weight average molecular weight: 700,000 g/mol, substitution rate: 5 %) as a binding binder is added to the dispersion and stirred with a homogenizer to prepare a second composition.
6) The second composition is applied with a dual slot die on the negative electrode active material layer, and then the slurry is vaporized at a temperature of 100 °C. A support layer with a thickness of 17 µm is formed. The support layer is composed of 90 wt% inorganic particles and 10 wt% binding binder.
7) 1.4 g of PVDF-HFP (Kynar 2501-20 of Arkema, weight average molecular weight: 300,000 g/mol, substitution rate: 17 %) as the binder, 2.8 g of TMPTA as the first crosslinking agent, and 0.8 g of polyurethane diacrylate (Miramer PU2100 of Miwon Specialty Chemical, weight average molecular weight: 1400 g/mol) as the second crosslinking agent are added to 95 g of an electrolyte solution to prepare a slurry.
8) The slurry is stirred with a homogenizer, and Omnirad TPO-L as a photopolymerization initiator is added thereto at 2% relative to the total of the crosslinking agents to prepare a first composition.
9) The electrolyte solution is one in which 1 M of LiPF₆ and 2 wt% of vinylene carbonate are dissolved in a mixed solvent in which ethylene carbonate and ethyl methyl carbonate are mixed in a volume ratio of 3:7.
10) The first composition is applied with a dual slot die on the upper portion of the support layer. Subsequently, UV is irradiated thereto to obtain an electrolyte layer with a thickness of 50 µm.
11) The negative electrode plate on which the support layer and the electrolyte layer are formed is punched into a size of 31 mm x 43 mm.

### (2) Positive electrode

1) A mixture composed of 95 wt% of LiFePO₄ as the positive electrode active material, 2 wt% of conductive carbon black (Super P; IMERYS Graphite & Carbon) as the conductive material, and 3 wt% of PVdF having a weight average molecular weight of about 800,000 as the binding agent is prepared. A slurry in which the mixture is uniformly dispersed in NMP is obtained.
2) The slurry is applied to one side of an aluminum current collector with a thickness of 20 µm, and then dried and rolled to prepare a positive electrode plate in which the positive electrode active material layer is laminated.
3) The porosity and thickness of the positive electrode active material layer are 30 % and 101.4 µm, respectively.
4) The positive electrode plate is punched into a size of 30 mm x 42 mm.

### (3) Battery assembly

An electrode assembly in which the positive electrode active material layer of the positive electrode plate and the electrolyte layer of the negative electrode plate are arranged to face each other is prepared. This electrode assembly is housed in a pouch to complete the battery. 5 samples of this battery are prepared. The performance of the battery is the arithmetic mean value of the 5 samples.

### Example 2. Electrode and battery

The procedure of Example 1 is repeated, except that in the 7) process of the negative electrode preparation, the input amounts of the binder and the first crosslinking agent are changed to 2.8 g and 1.4 g, respectively. An electrode and a battery are obtained.

### Example 3. Electrode and battery

The procedure of Example 1 is repeated, except that in the 7) process of the negative electrode preparation, the input amounts of the binder, the first crosslinking agent, and the second crosslinking agent are changed to 2.1 g, 4.2 g, and 0.8 g, respectively. An electrode and a battery are obtained.

### Example 4. Electrode and battery

The same procedure as Example 1 is repeated, except that in the 4) process of the negative electrode preparation, the input amounts of the first inorganic particles and the second inorganic particles are changed to 8.0 g and 2.0 g, respectively. An electrode and a battery are obtained.

### Example 5. Electrode and battery

The procedure of Example 1 is repeated, except that in the 3) process of the negative electrode preparation, polygonal alumina (AES-11 of Sumitomo, true density: 3.95 g/cm³; green density: 2.06 g/cm³; BET specific surface area by nitrogen adsorption/desorption: 6.4 m²/g; average size: 436 nm) is prepared as the second inorganic particles. An electrode and a battery are obtained.

### Comparative Example 1. Electrode and battery

The same procedure as Example 1 is repeated, except that in the 4) process of the negative electrode preparation, a dispersion in which 10.0 g of the first inorganic particles is dispersed in 10 g of N-methyl-pyrrolidone (NMP) is prepared. An electrode and a battery are obtained.

### Comparative Example 2. Electrode and battery

The same procedure as Example 1 is repeated, except that in the 4) process of the negative electrode preparation, a dispersion in which 10.0 g of the second inorganic particles is dispersed in 10 g of N-methyl-pyrrolidone (NMP) is prepared. An electrode and a battery are obtained.

### Comparative Example 3. Electrode and battery

The same procedure as Example 1 is repeated, except that in the 4) process of the negative electrode preparation, a dispersion in which 10.0 g of polygonal alumina (AES-11 of Sumitomo, true density: 3.95 g/cm³; green density: 2.06 g/cm³; BET specific surface area by nitrogen adsorption/desorption: 6.4 m²/g; average size: 436 nm) is dispersed in 10 g of N-methyl-pyrrolidone (NMP) is prepared. An electrode and a battery are obtained.

### [Results and Discussion]

### 1. SEM images of inorganic particles

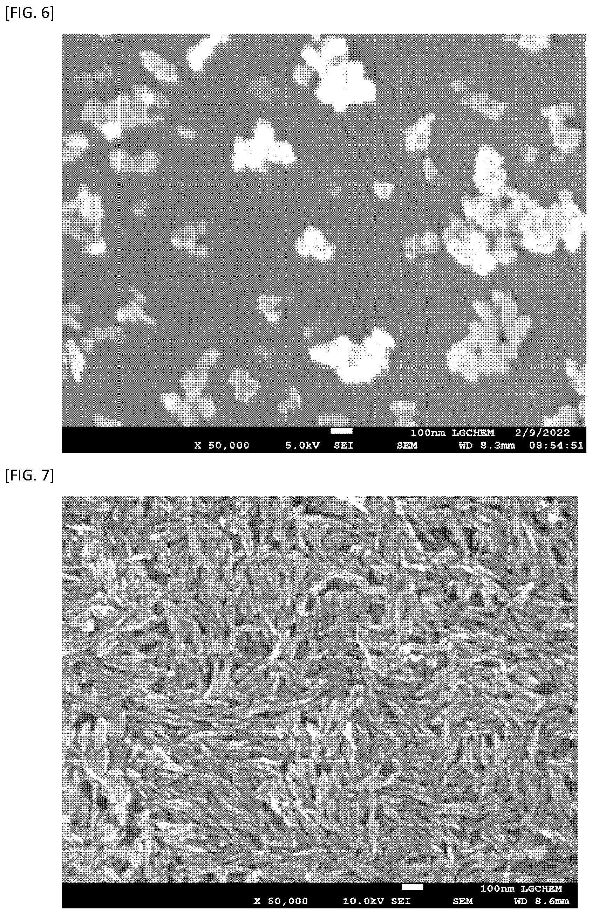

FIG. 6 is an SEM image of the first inorganic particles used in an Example of the present invention. Referring to FIG. 6, it is confirmed that the first inorganic particles are polygonal and the average size thereof is about 350 nm.

FIG. 7 is an SEM image of the second inorganic particles used in an Example of the present invention. Referring to FIG. 7, it is confirmed that the second inorganic particles are needle-shaped and the average longitudinal length thereof is about 155 nm and the average transverse length thereof is about 35 nm.

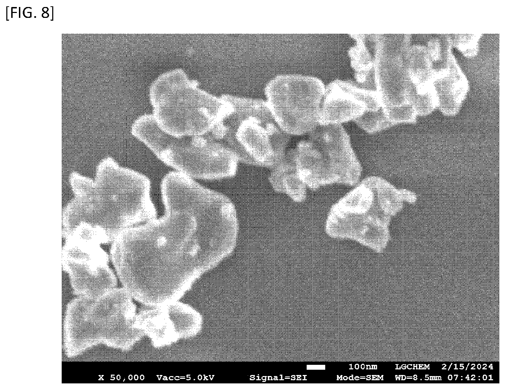

FIG. 8 is an SEM image of another second inorganic particles used in an Example of the present invention. Referring to FIG. 8, it is confirmed that this second inorganic particles are polygonal and the average size thereof is 436 nm. 2. Green density measurement of inorganic particles

The green density of the first inorganic particles was measured to be 1.35 g/cm³. The green density of the second inorganic particles was measured to be 0.99 g/cm³. The green density of the inorganic particles used in Example 5 and Comparative Example 3 was measured to be 2.06 g/cm³.

### 3. Specific surface area measurement of inorganic particles

The specific surface area of the first inorganic particles was measured to be 63 m²/g. The specific surface area of the second inorganic particles was measured to be 101 m²/g. The specific surface area of the inorganic particles used in Example 5 and Comparative Example 3 was measured to be 6.4 m²/g.

### 4. Dielectric breakdown voltage and ionic conductivity of the support layer

Table 1 below shows the measurement results of the dielectric breakdown voltage and ionic conductivity of the support layers of the Examples and Comparative Examples.

**[Table 1]**

| | | Dielectric breakdown voltage | Ionic conductivity |
|---|---|---|---|
| | | kV/mil | mS/cm |
| Example | 1 | 1.33 | 1.64 |
| | 2 | 1.33 | 1.57 |
| | 3 | 1.33 | 1.55 |
| | 4 | 1.53 | 1.69 |
| | 5 | 0.69 | 1.17 |
| Comparative Example | 1 | 0.74 | 1.12 |
| | 2 | 1.46 | 0.83 |
| | 3 | 0.59 | 1.26 |

Referring to Table 1, it is confirmed that the dielectric breakdown voltage and ionic conductivity of the Examples are generally higher compared to the Comparative Examples. In particular, it is confirmed that Examples 1 to 4 simultaneously exhibit superior dielectric breakdown voltage and ionic conductivity compared to the Comparative Examples.

### 5. Capacity and cycle performance of the battery

Table 2 below shows the measurement results of the battery capacity and cycle performance of the Examples and Comparative Examples.

**[Table 2]**

| | | 1st Cycle | 1st Cycle | 10th Cycle | 10th Cycle | 10 Cycle Retention |
|---|---|---|---|---|---|---|
| | | Discharge capacity | Charge capacity | Discharge capacity | Charge capacity | Discharge capacity retention |
| | | mAh/g | mAh/g | mAh/g | mAh/g | % |
| Example | 1 | 41.3 | 43.3 | 40.7 | 43.1 | 98.55 |
| | 2 | 41.1 | 44.1 | 39.8 | 42.1 | 96.84 |
| | 3 | 41.3 | 43.8 | 40.1 | 43.3 | 97.09 |
| | 4 | 42 | 42.9 | 41.2 | 42.9 | 98.10 |
| | 5 | 39.6 | 43.6 | 34.5 | 39.5 | 87.13 |
| Comparative Example | 1 | 40.5 | 43.6 | 36.2 | 39.7 | 89.38 |
| | 2 | 38.3 | 41.9 | 31.1 | 37.3 | 81.20 |
| | 3 | 39.2 | 42.7 | 30.3 | 39.1 | 77.30 |

Referring to Table 3, it is confirmed that the batteries of the Examples generally exhibit excellent capacity and lifespan characteristics compared to the batteries of the Comparative Examples. In particular, it is confirmed that Examples 1 to 4 exhibit superior battery performance compared to the Comparative Examples.

## Claims

1. An electrode, comprising:
an electrode current collector;
an electrolyte layer disposed on one side or both sides of the electrode current collector, and comprising a first composition;
an electrode active material layer disposed between the electrode current collector and the electrolyte layer; and
a support layer disposed between the electrode active material layer and the electrolyte layer, and comprising a second composition;
wherein the first composition comprises a binder, a crosslinking agent, an initiator, and an electrolyte solution,
wherein the second composition comprises first inorganic particles and second inorganic particles, and
wherein the true density of the first inorganic particles is equal to or less than the true density of the second inorganic particles.

2. The electrode of claim 1,
wherein the green density of the first inorganic particles is greater than the green density of the second inorganic particles, and
wherein the content of the first inorganic particles and the second inorganic particles of the second composition is greater than the binder content of the first composition.

3. The electrode of claim 1,
wherein the electrolyte layer comprises a cured product of the first composition, and
wherein the support layer comprises a dried product of the second composition.

4. The electrode of claim 1,
wherein the content of the second inorganic particles of the second composition is 5 wt% or more of the total content of the first inorganic particles and the second inorganic particles of the second composition.

5. The electrode of claim 1,
wherein the average size of the first inorganic particles is within a range of 100 nm to 500 nm,
wherein the average longitudinal length of the second inorganic particles is within a range of 100 nm to 200 nm, and
wherein the average transverse length of the second inorganic particles is within a range of 25 nm to 50 nm.

6. The electrode of claim 1,
wherein the first inorganic particles and the second inorganic particles each independently comprise a lithium-containing metal oxide, a lithium-free metal oxide, or a combination thereof.

7. The electrode of claim 1,
wherein the binder comprises a fluorine-based binder,
wherein the fluorine-based binder comprises a first unit derived from vinylidene fluoride and a second unit derived from a fluorine-containing alkyl vinyl compound,
wherein the content of the second unit of the fluorine-based binder is within a range of 10 wt% to 50 wt%, and
wherein the weight average molecular weight of the fluorine-based binder is within a range of 300,000 g/mol to 1,000,000 g/mol.

8. The electrode of claim 1,
wherein the crosslinking agent comprises a first polyfunctional crosslinking agent and a second polyfunctional crosslinking agent, and
wherein the number of functional groups of the first polyfunctional crosslinking agent is greater than the number of functional groups of the second polyfunctional crosslinking agent.

9. The electrode of claim 1,
wherein the initiator comprises a photopolymerization initiator.

10. The electrode of claim 1,
wherein the electrolyte solution comprises a non-aqueous solvent, a lithium salt, and an electrolyte additive,
wherein the non-aqueous solvent comprises ethylene carbonate and ethyl methyl carbonate,
wherein the lithium salt comprises LiN(CF₃SO₂)₂, and
wherein the electrolyte additive comprises vinylene carbonate.

11. An electrode, comprising:
an electrode current collector;
an electrolyte layer disposed on one side or both sides of the electrode current collector;
an electrode active material layer disposed between the electrode current collector and the electrolyte layer; and
a support layer disposed between the electrode active material layer and the electrolyte layer;
wherein the electrolyte layer comprises a polymeric crosslinked structure and an electrolyte solution impregnated in the polymeric crosslinked structure,
wherein the support layer comprises first inorganic particles and second inorganic particles, and
wherein the true density of the first inorganic particles is equal to or less than the true density of the second inorganic particles.

12. The electrode of claim 11,
wherein the electrode active material layer and the support layer are in contact with each other.

13. The electrode of claim 11,
wherein the first inorganic particles and the second inorganic particles comprise boehmite (AlO(OH)).

14. The electrode of claim 11,
wherein the first inorganic particles are polygonal inorganic particles, and
wherein the second inorganic particles are plate-shaped inorganic particles or needle-shaped inorganic particles.

15. The electrode of claim 11,
wherein the thickness per layer of the electrolyte layer is greater than the thickness of the electrode current collector,
wherein the thickness per layer of the electrolyte layer is greater than the thickness per layer of the support layer, and
wherein the thickness per layer of the support layer is greater than the thickness of the electrode current collector.

16. A battery, comprising:
a positive electrode and a negative electrode;
wherein at least one of the positive electrode and the negative electrode comprises an electrode current collector; an electrolyte layer disposed on one side or both sides of the electrode current collector; an electrode active material layer disposed between the electrode current collector and the electrolyte layer; and a support layer disposed between the electrode active material layer and the electrolyte layer,
wherein the electrolyte layer comprises a polymeric crosslinked structure and an electrolyte solution impregnated in the polymeric crosslinked structure,
wherein the support layer comprises first inorganic particles and second inorganic particles, and
wherein the true density of the first inorganic particles is equal to or less than the true density of the second inorganic particles.

17. The battery of claim 16,
wherein the positive electrode comprises a positive electrode current collector and a positive electrode active material layer disposed on one side or both sides of the positive electrode current collector,
wherein the negative electrode comprises a negative electrode current collector; a negative electrode electrolyte layer disposed on one side or both sides of the negative electrode current collector; a negative electrode active material layer disposed between the negative electrode current collector and the negative electrode electrolyte layer; and a negative electrode support layer disposed between the negative electrode active material layer and the negative electrode electrolyte layer,
wherein the negative electrode electrolyte layer comprises a first polymeric crosslinked structure and a first electrolyte solution impregnated in the first polymeric crosslinked structure,
wherein the negative electrode support layer comprises first inorganic particles and second inorganic particles, and
wherein the true density of the first inorganic particles is equal to or less than the true density of the second inorganic particles.

18. The battery of claim 17,
wherein the positive electrode further comprises a positive electrode electrolyte layer,
wherein the positive electrode active material layer is disposed between the positive electrode current collector and the positive electrode electrolyte layer, and
wherein the positive electrode electrolyte layer comprises a second polymeric crosslinked structure and a second electrolyte solution impregnated in the second polymeric crosslinked structure.

19. A battery, comprising:
a first electrode and a second electrode;
wherein the first electrode comprises a first electrode current collector, a negative electrode electrolyte layer disposed on one side of the first electrode current collector, a positive electrode active material layer disposed on the other side of the first electrode current collector, a negative electrode active material layer disposed between the first electrode current collector and the negative electrode electrolyte layer, and a negative electrode support layer disposed between the negative electrode electrolyte layer and the negative electrode active material layer,
wherein the second electrode comprises a second electrode current collector, a negative electrode electrolyte layer disposed on one side of the second electrode current collector, a positive electrode active material layer disposed on the other side of the second electrode current collector, a negative electrode active material layer disposed between the second electrode current collector and the negative electrode electrolyte layer, and a negative electrode support layer disposed between the negative electrode electrolyte layer and the negative electrode active material layer,
wherein the negative electrode electrolyte layer comprises a first polymeric crosslinked structure and a first electrolyte solution impregnated in the first polymeric crosslinked structure,
wherein the negative electrode support layer comprises first inorganic particles and second inorganic particles, and
wherein the true density of the first inorganic particles is equal to or less than the true density of the second inorganic particles.

20. The battery of claim 19,
wherein the first electrode and the second electrode further comprise a positive electrode electrolyte layer,
wherein the positive electrode active material layer is disposed between the first electrode current collector and the positive electrode electrolyte layer and between the second electrode current collector and the positive electrode electrolyte layer, and
wherein the positive electrode electrolyte layer comprises a second polymeric crosslinked structure and a second electrolyte solution impregnated in the second polymeric crosslinked structure.
